(19) Europäisches Patentamt
European Patent Office
Office européen des brevets

(11) Veröffentlichungsnummer: **0 061 058**
**B1**

(12) # EUROPÄISCHE PATENTSCHRIFT

(45) Veröffentlichungstag der Patentschrift: **13.02.85**

(51) Int. Cl.⁴: **C 08 L 71/02**, C 08 G 18/48, C 08 G 18/65, C 08 G 18/14

(21) Anmeldenummer: **82101814.0**

(22) Anmeldetag: **08.03.82**

(54) **Lösungen von Oligourethan-ethern in Polyetherpolyolen und deren Verwendung in einem Verfahren zur Herstellung von Polyurethan-Schaumstoffen guter Hochfrequenz-Verschweissbarkeit und guter Flammkaschierbarkeit.**

(30) Priorität: **19.03.81 DE 3110724**

(43) Veröffentlichungstag der Anmeldung:
**29.09.82 Patentblatt 82/39**

(45) Bekanntmachung des Hinweises auf die Patenterteilung:
**13.02.85 Patentblatt 85/7**

(84) Benannte Vertragsstaaten:
**BE DE FR GB IT**

(56) Entgegenhaltungen:
**EP - A - 0 035 687**
**DE - A - 2 638 759**
**FR - A - 2 357 590**

(73) Patentinhaber: **BAYER AG, Konzernverwaltung RP Patentabteilung, D-5090 Leverkusen 1 Bayerwerk (DE)**

(72) Erfinder: **König, Klaus, Dr., Heymannstrasse 50, D-5090 Leverkusen 1 (DE)**
Erfinder: **Becker, Gernot, Dr., Goethestrasse 57, D-4047 Dormagen 1 (DE)**
Erfinder: **Seifert, Peter, Dr., August-Kierspel-Strasse 161, D-5060 Bergisch-Gladbach 2 (DE)**

**EP 0 061 058 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft Lösungen von getrennt hergestellten, OH-endgruppenhaltigen Oligo-urethanethern in höhermolekularen, Hydroxylendgruppen enthaltenden Polyethern, sowie die Verwendung dieser Lösungen als modifizierte Polyole bei der Herstellung von Polurethanschaumstoffen mit hervorragender Hochfrequenz-Verschweißbarkeit und Flammkaschierbarkeit.

Einsatzgebiete, wo die Hochfrequenzverschweißbarkeit besonders geschätzt wird, sind beispielsweise die Herstellung der Türverkleidungen bei Automobilen, welche die Verschweißung von Schaumstoffolien mit sich selbst oder mit anderen Werkstoffen erfordert, die Erzeugung von Steppeffekten oder die Herstellung von Formkörpern. Weiterhin werden durch Flammkaschierung Verbundsysteme mit Textilien, z. B. als Polsterauflagen hergestellt, die nachträglich durch Hochfrequenz-(HF)-Verschweißung profiliert und/oder verformt werden. Ganz allgemein kann dabei die zur Verschweißung notwendige Energiezufuhr auf vielerlei Weise, z. B. mit einer Flamme, einem elektromagnetischen Feld (Hochfrequenz-Verschweißung), einer Strahlung, einer beheizten Oberfläche und ähnlichem, durchgeführt werden.

Es ist bekannt, Schaumstoffe aus Polyisocyanaten und Polyesterpolyolen unter Zusatz geeigneter Hilfs- und Zusatzstoffe herzustellen, die von Natur aus flammkaschierbar und auch in gewissem Umfange hochfrequenzverschweißbar sind. Diese Schaumstoffe sind jedoch nur auf speziellen Verarbeitungsmaschinen herstellbar und sind in einer Reihe von Eigenschaften den Polyetherpolyurethanstoffen unterlegen; z. B. ist die Offenporigkeit schlechter, die Elastizität niedriger und die Widerstandsfähigkeit gegen Feuchtigkeit und Wärme geringer.

Es ist auch bekannt, flammkaschierbare und hochfrequenzverschweißbare Polyurethanschaumstoffe aus Polyetherpolyolen, aus Polyisocyanaten, Wasser und/oder Treibmitteln in Gegenwart von Emulgatoren, Stabilisatoren, Katalysatoren sowie anderer Hilfsmittel durch Zusatz spezieller Hilfsmittel herzustellen.

So wird in der US-PS 3 205 120 die Herstellung von flammkaschierbaren Polyether-Polyurethan-Schaumstoffen durch Zusatz einer geringeren Menge eines Polyols vom Molekulargewicht 200 bis 1500 beschrieben. Speziell verwendet werden phosphorhaltige Polyole wie Tris(dipropylenglykol)phosphit. Nachteilig an diesem Verfahren sind eine Verschlechterung der Verarbeitungssicherheit, eine gewisse Tendenz zur Kernverfärbung sowie ein bei den üblichen Einsatzmengen resultierendes Flammkaschierverhalten, das dem eines Polyesterpolyurethanschaumes deutlich unterlegen ist.

Weiterhin ist aus der US-PS 4 060 439 die Mitverschäumung geringer Mengen von Alkylenglykolen mit 2 bis 8 C-Atomen, die Mitverschäumung von Triolen mit 3 is 10 C-Atomen, die Mitverschäumung von Dialkanolaminen mit 2 bis 10 C-Atomen sowie von kurzkettigen Glykolethern und von mehrwertigen Phenolen in Polyetherweichschaumrezepturen bekannt. Erfahrungsgemäß bringt die Mitverschäumung solcher Verbindungen jedoch eine schwierigere Verschäumung und insbesondere ein sehr enges Verarbeitungsspiel zwischen Offen- und Geschlossenporigkeit mit sich.

Ferner wird in der US-PS 3 497 416 zur Herstellung eines verschweißbaren Polyurethanschaumstoffs die Verschäumung eines Polyetherpolyols mit einem modifizierten Polyisocyanat, und zwar mit dem Umsetzungsprodukt Dipropylenglykol und/oder Dibutylenglykol mit einem Überschuß an Polyisocyanat beschrieben. Nachteilig an diesem Verfahren ist, daß für eine genügende Offenzelligkeit das toxikologisch bedenkliche Dimethylformamid als Zellöffner verwendet werden muß. Darüber hinaus weisen solche Schaumstoffe einen hohen Druckverformungsrest auf. Außerdem sind solche Polyether-NCO-Prepolymere nur mäßig lagerstabil.

Angesichts der beschriebenen Nachteile bei den Polyetherpolyurethanschaumstoffen, welche erklären, daß für die Flammkaschierung und Hochfrequenzverschweißung größtenteils Polyesterpolyurethanschaumstoffe eingesetzt werden, besteht ein großer Bedarf für einen produktionssicheren, flammkaschierbaren und Hochfrequenz-(HF)-verschweißbaren Polyetherschaumstoff.

Es sind auch schon Lösungen von Polyisocyanat-Polyadditions-Verbindungen in Polyolen bekannt geworden; so werden in der DE-OS 2 638 759 Lösungen dieser Art mit Feststoffgehalten von 5 bis 70 Gew.-% beschrieben, die durch Umsetzung von Diisocyanaten mit H-aktiven Verbindungen (unter vielen anderen auch diprimären Diolen) in mehrwertigen Alkoholen mit einem Molekulargewicht zwischen 62 und 450 (in der Regel jedoch zwischen 62 und maximal ca. 200) als Reaktionsmedium erhalten werden, bzw. auch durch nachträgliches Auflösen der pulverisierten, separat hergestellten Polyadditionsverbindungen in den genannten mehrwertigen Alkoholen.

Solche Lösungen können zwar bei der Herstellung von Polyurethankunststoffen als Ausgangsmaterialien vielfach Verwendung finden, für die Herstellung von flexiblen Überzügen und besonders Weichschaumstoffen sind sie jedoch ungeeignet, weil das Einbringen nennenswerter Mengen der Polyadditionsverbindung in die Polyurethankunssststoffrezeptur nur möglich ist, wenn gleichzeitig verhältnismäßig große Mengen der als Lösungsmittel dienenden, mehrwertigen niedermolekularen Alkohole mitverwendet werden, was die Verarbeitungssicherheit bei der Herstellung von Weichschaumstoffen (kritische Zusammenhänge zwischen Offenzelligkeit bzw. Schrumpfeigenschaften) stark beeinträchtigt oder die Herstellung eines offenporigen Weichschaumstoffes gänzlich unmöglich macht.

Es wurde nun überraschend gefunden, daß OH-endgruppenhaltige Oligourethanether (1) aus Diisocyanaten (a) und zweiwertigen, relativ kurzkettigen Polyetherdiolen (b) in höhermolelularen, mehrwertigen Polyetherpolyolen (2) — gegebenenfalls bei erhöhter Temperatur — klare, stabile Lösungen ergeben und daß sich derartige Lösungen problemlos zu Weichschaumstoffen mit guten mechanischen Eigenschaften und guter Hochfrequenz-Verschweißbarkeit verarbeiten lassen.

Gegenstand der Erfindung sind somit Lösungen von

1) 3 bis 60 Gew.-%, vorzugsweise 5 bis 30 Gew.-%, bezogen auf 1) und 2), an separat hergestellten, OH-endgruppenhaltigen Oligourethanethern als Umsetzungsprodukte von
   a) organischen Diisocyanaten, mit
   b) kurzkettigen Polyetherdiolen des mittleren Molekulargewichts 200 bis 800, vorzugsweise 200 bis 600, wobei
   das stöchiometrische Verhältnis von a) zu b)
   bei Diolen b) des mittleren Molekulargewichts 200 bis 280 zwischen 0,5 und 0,7,
   bei Diolen b) des mittleren Molekulargewichts 280 bis 600 zwischen 0,5 und 0,9 und
   bei Diolen b) des mittleren Molekulargewichts 600 bis 800 zwischen 0,5 und 0,75 beträgt,

in

2) mindestens zwei Hydroxylgruppen aufweisenden Polyetherpolyolen mit einem mittleren Molekulargewicht von 1000 bis 12 000, vorzugsweise 2000 bis 8000.

Gegenstand der Erfindung ist weiterhin ein Verfahren zur Herstellung von flammkaschhierbaren und hochfrequenzverschweißbaren Polyurethan-Weichschaumstoffen durch Umsetzung von Polyisocyanaten mit mindestens zwei Hydroxylgruppen aufweisenden höhermolekularen Verbindungen, gegebenenfalls weiteren höher- und/oder niedermolekularen Verbindungen mit gegenüber Isocyanaten reaktiven Wasserstoffatomen und Wasser, gegebenenfalls unter Mitverwendung von anderen Treibmitteln, Katalysatoren, Schaumstabilisatoren und anderen Zusatzstoffen, wobei als höhermolekulare Verbindung die erfindungsgemäßen Lösungen ausschließlich oder anteilweise eingesetzt werden.

Zur Herstellung der erfindunsgemäßen Lösungen kommen als organische Diisocyanate (a) aliphatische, cycloaliphtische, araliphatische, aromatische und heterocyclische Diisocyanate in Betracht, wie sie z. B. von W. Siefken in Justus Liebigs Annalen der Chemie, 562, Seiten 75 bis 136, beschrieben werden, beispielsweise solche der Formel

$$Q\ (NCO)_2$$

in der

Q einen aliphatischen Kohlenwasserstoffrest mit 2 bis 18, vorzugsweise 6 bis 10, C-Atomen, einen cycloaliphatischhen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen, oder einen araliphatischen Kohlenwasserstoffrest mit 8 bis 15, vorzugsweise 8 bis 13, C-Atomen

bedeutet, z. B. 1,4-Tetramethylendiisocyanat, 1,6-Hexamethylendiisocyanat, 1,12- Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat, Hexahydro-1,3- und/oder -1,4-phenylendiisocyanat, Perhydro-2,4'- und/oder -4,4'-diphenylmethandiisocyanat, sowie beliebige Gemische dieser Stellungs- und/oder Stereoisomeren, ferner 1,3- und 1,4-Phenylendiisocyanat, 2,4- und/oder 2,6-Toluylendiisocyanat, Diphenylmethan-2,4'- und/oder -4,4'-diisocyanat, sowie beliebige Gemische dieser Isomeren.

Bevorzugte Diisocyanate für die Herstellung der Oligourethanether (1) sind die isomeren Toluylendiisocyanate und Diphenylmethandiisocyanate, Hexamethylendiisocyanat, Dicyclohexylmethandiisocyanate und 1-Isocyanato-3,3,5-trimethyl-5-isocyanatomethyl-cyclohexan oder Gemische der genannten Isocynate. 2,4- und/oder 2,6-Toluylendiisocyanat und die Diphenylmethan-diisocyanate und ihre kernalkylierten Derivate sind besonders bevorzugt.

Die erfindungsgemäß in höhermolekularen, mehrwertigen Polyetherpolyolen (2) gelösten, Hydroxylendgruppen enthaltenden Oligourethanether (1) entstehen durch separate Umsetzung der vorstehend beschriebenen Diisocyanate (a) mit kurzkettigen Polyetherdiolen (b) des mittleren Molekulargewichts 200 bis 800. Derartige Polyetherdiole (b) werden in an sich bekannter Weise, z. B. durch alkalisch katalysierte Polymerisation von Propylenoxid, gegebenenfalls unter Mitverwendung von Ethylenoxid, vorzugsweise bis zu 50 Mol-% Ethylenoxid, auf Starterverbindungen mit vorzugsweise 2 reaktionsfähigen Wasserstoffatomen hergestellt. Geeignete Starterverbindungen sind beispielsweise Wasser oder zweiwertige Diole wie Ethylenglykol, Propylenglykol-1,2 oder -1,3, Butylenglykol-1,2, -1,3 oder -1,4, Hexandiol-1,6, Octandiol-1,8, Neopentylglykol, 1,4-Bis-hydroxymethyl-cyclohexan, Methyl-1,3-propandiol, Resorcin, Hydrochinon, 2,2-Bis-(4-hydroxy-phenyl)-propan, ferner Monoamine wie Methylamin, Stearylamin, Cyclohexylamin, Anilin sowie Mischungen der genannten Verbindungen.

Besonders bevorzugt sind Polyetherdiole (b) des mittleren Molekulargewichts 200 bis 600, besonders Polypropylenglykole, welche bis 30 Mol-% Ethylenoxidanteile enthalten können.

Erfindungsgemäß werden die durch separat geführte Umsetzung der Diisocyanate (a) mit den Polyetherdiolen (b) erhaltenen OH-Endgruppen enthaltenden Oligourethanether (1) anschließend in höhermolekularen, mehrwertigen Polyetherpolyolen (2) des mittleren Molekulargewichts 1000 bis 12 000, vorzugsweise 2000 bis 8000 — gegebenenfalls bei erhöhter Temperatur — gelöst.

Derartige Polyetherpolyole vom Molekulargewicht 1000 bis 12 000 werden in an sich bekannter Weise, z. B. durch alkalisch katalysierte Polymerisation von Propylenoxid, gegebenenfalls unter Mitverwendung von bis zu 60, vorzugsweise bis zu 30 Mol-%, Ethylenoxid, auf zwei- oder mehrwertige Starterverbindungen mit reaktionsfähigen Wasserstoffatomen hergestellt. Geeignete Starterverbindungen sind z. B.:

Wasser, Ethylenglykol, Propylenglykol-1,2 oder -1,3, Butylenglykol-1,2, -1,3 oder -1,4, Hexandiol-1,6, Octandiol-1,8, Neopentylglykol, 1,4-Bis-hydroxymethylcyclohexan, 2-Methyl-1,3-propandiol, Glycerin, Trimethylolethan und -propan, Pentaerythrit, Mannit, Sorbit, Formit, Rohrzucker, Resorcin, Hydrochinon, 2,2-Bis-(4-hydroxyphenyl)-propan, Ammoniak, Methylamin, Ethylendiamin, Tetra- oder Hexamethylendiamin, Ethanolamin, Diethanolamin, Triethanolamin, Anilin, 2,4- und 2,6-Diaminotoluol und Polyphenyl-polymethylenpolyamine, wie sie durch Anilin-Formaldehyd-Kondensation erhalten werden sowie Mischungen der genannten Verbindungen. Als Starter kommen darüber hinaus auch harzartige Materialien des Novolak- und Resoltyps in Frage.

Geeignete Polyetherpolyole werden in ihrer Zusammensetzung und Modifizierung auch in der DE-OS 2 920 501 beschrieben.

Die Umsetzung der Diisocyanate (a) mit den Dialkoholen (b) zur separaten Herstellung der Oligourethanether (1) geschieht nach bekannten Verfahren bei Temperaturen von etwa 0 bis 200° C, vorzugsweise 30 bis 150° C.

Zum Beispiel kann die Hydroxylkomponente vorgelegt und das Diisocyanat entweder auf einmal oder nach und nach zugegeben werden, wobei man durch äußere oder innere Kühlung für Temperaturkonstanz sorgt. In vielen Fällen ist es aber auch zulässig, ohne Kühlung zu arbeiten, und die Temperatur der Reaktionsmischung durch die exotherme Reaktion ansteigen zu lassen.

Selbstverständlich sind auch kontinuierliche Verfahren zur Herstellung der erfindungsgemäßen Oligourethanether möglich, etwa in der Weise, daß man die Hydroxyl-Komponente mit dem Isocyanat in einem statistischen oder dynamischen Durchlaufmischer vereinigt und das Reaktionsgemisch von dort in ein nachgeschaltetes Ausführgefäß fördert, in dem die Reaktion beendet wird. Auch Rührkesselkaskaden oder Zellarreaktoren sind für die kontinuierliche Durchführung der Polyadditionsreaktion geeignet.

Die Reaktion kann gewünschtenfalls mit in der Polyurethanchemie an sich bekannten und üblichen Katalysatoren beschleunigt werden. Solche Katalysatoren sind z. B. tertiäre Amine, Amidine, Metallhydroxide, -alkoholate, -phenolate oder -carboxylate sowie Carboxylate und Chelate der Übergangsmetalle.

Die erfindungsgemäßen Lösungen werden durch Auflösung der Oligourethane (1) in den o. g. höhermolekularen Polyetherpolyolen (2) in an sich bekannten Mischvorrichtungen erhalten.

Zur Erzielung einer — gegebenenfalls bei erhöhter Temperatur — klaren Lösung der Oligourethanether in den höhermolekularen, mehrfunktionellen Polyetherpolyolen und zur Einhaltung eines für die Herstellung von Weichschaumstoffen notwendigen Viskositätsbereichs von vorzugsweise kleiner 3500 mPas, ist das stöchiometrische NCO/OH-Verhältnis zwischen Diisocyanat (a) und kurzkettigem Polyetherdiol (b) von großer Wichtigkeit. Es soll, wie o. g., bei Dialkoholen des mittleren Molekulargewichts 200 bis 280 zwischen 0,5 und 0,7, bei Dialkoholen des mittleren Molekulargewichts 280 bis 600 etwa 0,5 und 0,9 und bei Dialkoholen des mittleren Molekulargewichts 600 bis 800 etwa zwischen 0,5 und 0,75 betragen. Der Gehalt der Lösung an Oligourethanethern (1) kann 3 bis 60 Gew.-% betragen, bevorzugt sind aber Konzentrationen von 5 bis 30 Gew.-%, weil einerseits solche Lösungen in Konzentrationen unter 5 Gew.-% nur unwesentliche Eigenschaftsveränderungen in den aus den Lösungen hergestellten Polyurethankunststoffen bewirken, andererseits aber Gehalte über 30 Gew.-% häufig für die Verarbeitung störende hohe Viskositäten aufweisen können.

Die erfindungsgemäßen Lösungen werden als modifizierte Polyetherpolyole in an sich üblicher Verfahrensweise zur Herstellung von Polyurethan-Weichschaumstoffen verwendet. Diese so zugänglichen verschweißbaren Weichschaumstoffe sind mit Hilfe von an sich bekannten Schweißeinrichtungen in hervorragender Weise verschweißbar und weisen darüber hinaus ein ausgezeichnetes Gesamteigenschaftsniveau auf.

Ein Vergleich der erfindungsgemäßen Oligourethanlösungen bei der Polyurethan-Weichschaumherstellung mit entsprechenden Verschäumungsrezepturen (vgl. hierzu die Verschäumungsbeispiele 6 bis 11 und die Lösungen B1 bis B4), bei denen die Polyetherdiole (b) als Zusatzmittel mitverwendet werden bzw. zusammen mit höhermolekularen Polyetherpolyolen als urethanmodifizierte Polyole eingesetzt werden, beweist deren Überlegenheit, was insbesondere die Verschäumungssicherheit und das Eigenschaftsniveau der resultierenden Schaumstoffe, aber auch die niedrige Viskosität der Polyolkomponente anbetrifft. Die Zugabe entsprechender Mengen linearen Dialkohols nämlich führt entweder zu Schrumpf oder ergibt einen Schaum mit schlechten mechanischen Eigenschaften (Verschäumungsbeispiele 10 und 11). Wird die Addition von linearem Dialkohol und Diisocyanat im Reaktionsmedium Polyether durchgeführt (vgl. Beispiele B1 bis B4), so werden durch Nachreaktion des Polyethers höherviskose Lösungen erhalten. Darüber hinaus lassen sich die Lösungen auch in Polyethern mit überwiegend primären OH-Endgruppen herstellen. Bei der Reaktion von Dialkohol und Diisocyanat in derartigen Polyethern würden sich selbst bei sehr niedrigen Feststoffgehalten äußerst hohe Viskositäten der Endprodukte ergeben.

Bei der erfindungsgemäßen Herstellung von Weichschaumstoffen werden neben den schon genannten Ausgangskomponenten Wasser und/oder andere Treibmittel, Aktivatoren und gegebenenfalls weitere an sich bekannte Hilfs- und Zusatzmittel mitverwendet, wie sie ebenfalls den oben angegebenen Druckschriften zu entnehmen sind; z. B. der DE-OS 2 854 384, S. 25 bis 31.

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 247 beschrieben.

Für die übliche Schaumstoffherstellung geeignete weitere Polyhydroxylkomponenten werden beispielsweise in der DE-OS 2 854 384, S. 14 und S. 16 bis 19, weitere niedermolekulare Verbindungen auf S. 20 bis 25 sowie Polyisocyanate zur Schaumstoffbildung auf den Seiten 8 bis 11 beschrieben.

Bei der Schaumstoffherstellung wird erfindungsgemäß die Verschäumung oft in Formen durchgeführt. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, es kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter »overcharging« gearbeitet; eine derartige Verfahrensweise ist z. B. aus den amerikanischen Patentschriften 3 178 490 und 3 182 104 bekannt.

Bei der Formversschäumung werden vielfach an sich bekannte »äußere Trennmittel«, wie Siliconöle, mitverwendet. Man kann aber auch sogenannte »innere Trennmittel«, gegebenenfalls im Gemisch mit äußeren Trennmitteln, verwenden, wie sie z. B. aus den Deutschen Offenlegungsschriften 2 121 670 und 2 307 589 bekanntgeworden sind.

Erfindungsgemäß lassen sich auch kalthärtende Schaumstoffe herstellen (vgl. britische Patentschrift 1 162 517, Deutsche Offenlegungsschrift 2 153 086).

Selbstverständlich können aber auch Schaumstoffe durch Blockverschäumung oder nach dem an sich bekannten Doppeltransportbandverfahren hergestellt werden.

Die nachfolgenden Beispiele dienen der Erläuterung der Erfindung. Wenn nicht anders vermerkt, sind Mengenangaben als Gewichtsteile bzw. Gewichtsprozente zu verstehen.

## Beispiele

### 1. Herstellung der Lösungen

#### Beispiel A 1:

211,5 g (≙ 0,5 Mol) eines Polypropylenoxids der OH-Zahl 265 werden bei einer Temperatur von 90 bis 100°C innerhalb von 10 bis 15 Minuten mit 69,6 g (=0,4 Mol) Toluylendiisocyanat (TDI 80) versetzt. Die Reaktionsmischung wird anschließend bei 100°C so lange gerührt (2 bis 5 Stunden), bis keine NCO-Gruppen mehr nachzuweisen sind. Der gebildete Oligourethanether wird dann in 2530 g auf 100°C erwärmten Polyether K eingerührt. Die klare Lösung (Feststoffgehalt 10%) weist bei 25°C eine Viskosität von 1100 mPas auf.

In ganz analoger Verfahrensweise werden folgende Lösungen von Oligourethanen in höhermolekularen Polyethern hergestellt.

Es bedeuten:

Dialkohol I:
Polypropylenoxid der OH-Zahl 515

Dialkohol II:
Polypropylenoxid der OH-Zahl 265

Dialkohol III:
Polypropylenglykolethoxylat (15% Ethylenoxideinheiten an den Kettenenden) der OH-Zahl 150

Höhermolekularer Polyether K:
gestartet auf 90% Glycerin und 10% Propylenglykol-1,2; in der Kette 10% Ethylenoxid- und 90% Propylenoxid-Einheiten, OH-Zahl: 46

Höhermolekularer Polyether L:
gestartet auf Trimethylolpropan, in der Kette 18% Ethylenoxid- und 82% Propylenoxid-Einheiten; etwa 90 Mol-% primäre OH-Endgruppen, OH-Zahl 35.

TDI 80:
Toluylendiisocyanat (80% 2,4- und 20% 2,6-Isomere)

MDI:
Diphenylmethan-4,4'-diisocyanat

HDI:
1,6-Hexamethylendiisocyanat

| Lösung | Dialkohol | Diisocyanat | Molverhältnis Dialkohol zu Diisocyanat | höhermolekularer Polyether | Feststoffgehalt | Viskosität (mPas) 25°C |
|---|---|---|---|---|---|---|
| A 2 | II | TDI 80 | 5 : 4 | K | 20% | 3000 |
| A 3 | II | TDI 80 | 5 : 4 | K | 30% | — |
| A 4 | II | MDI | 4,5 : 5,5 | K | 10% | 1350 |
| A 5 | II | MDI | 4,5 : 5,5 | K | 20% | 3500 |
| B 1 | I | TDI 80 | 2 : 1 | K | 20% | 1400 |
| B 3 | II | TDI 80 | 7 : 6 | K | 20% | 2700 |
| C 1 | II | MDI | 3 : 2 | K | 20% | 1915 |
| C 2 | II | HDI | 3 : 2 | K | 20% | 935 |
| C 3 | III | TDI 80 | 2 : 1 | K | 20% | 755 |
| C 4 | II | TDI 80 | 4 : 3 | K | 20% | 1810 |
| C 5 | II | TDI 80 | 4 : 3 | K | 30% | 3510 |
| C 6 | II | TDI 80 | 4 : 3 | K | 40% | 8275 |
| C 7 | II | TDI 80 | 4 : 3 | L | 20% | 2300 |
| C 8 | I | TDI 80 | 2 : 1 | L | 20% | 1990 |
| C 9 | II | MDI | 4 : 3 | L | 20% | 3508 |

## 2. Vergleichsbeispiele B 2 und B 4

### Beispiel B 2:

217,9 g (≙ 1 Mol) Dialkohol I und 1219,6 g Polyether K werden bei einer Temperatur von 100° C mit 87 g TDI 80 (≙ 0,5 Mol) versetzt und 5 Stunden gerührt. Die klare Lösung (Feststoffgehalt 20%) weist bei 25° C eine Viskosität von 2450 mPas auf.

In ganz analoger Verfahrensweise wird die Lösung B 4 hergestellt.

| | |
|---|---|
| Alkoholkomponente: | Dialkohol II |
| Isocyanatkomponente: | TDI 80 |
| Molverhältnis Dialkohol/Diisocyanat: | 7 : 6 |
| Hochmolekularer Polyether: | Polyether K |

Analytische Daten:

| | |
|---|---|
| Feststoffgehalt: | 20% |
| Viskosität bei 25° C: | 5750 mPas |

## 3. Anwendungsbeispiele

### Herstellung von Polyurethan-Weichschaumstoffen

Aus den Lösungen A 1 bis A 5, B 1 bis B 4 und C 1 bis C 9 wurden Weichschaumstoffe hergestellt.

Die Herstellung der Weichschaumstoffe erfolgte nach dem Handverschäum-Verfahren. (Innige Vermischung der Polyole mit Stabilisator, Wasser, Aktivator; Zugabe von Isocyanat und Aufschäumen nach nochmaligem Vermischen in einem Papierpäckchen.)

Die Verfahrensweise ist im folgenden tabellarisch zusammengefaßt. Die erhaltenen Schaumstoffe wurden mit einer glatten Elektrode von 1 cm Breite und 10 cm Länge (10 $cm^2$ Oberfläche) unter einem Druck von 9 $kp/cm^2$ verschweißt, und zwar unter Verwendung von je 10 mm starken Schaumstoffolien (Schaum/Schaum) sowie einem Verbundsystem aus einem Polyamid-Velours, 8 mm Schaumfolie und einem Polyamid-Charmeuse. Die Verschweißspannung betrug 650 V, die Stromstärke 480 mA. Das eingesetzte HF-Schweißgerät war ein Hochfrequenz-Generator HG 600 S der Fa. Herfurth, Hamburg-Altona. Die Frequenz betrug 27,12 MHz, die Generatorleistung 600 W.

Es bedeuten:

| | |
|---|---|
| TDI 80: | Toluylendiisocyanat (80% 2,4- und 20% 2,6-Isomeres) |
| TDI 65: | Toluylendiisocyanat (65% 2,4- und 35% 2,6-Isomeres) |
| Polyether I: | gestartet auf 90% Glycerin und 10% Propylenglykol-1,2 in der Kette 10% Ethylenoxid und 90% Propylenoxid, über 95 Mol-% sekundäre OH-Gruppen, OH-Zahl 46 |
| Glykol (b) I: | Polypropylenetherdiol, OH-Zahl 515 |
| Glykol (b) II: | Polypropylenetherdiol, OH-Zahl 265. |

2. A.Herstellung von Weichschaumstoffen aus PU-Lösungen in Polyethern unter Variation der gelösten Menge Polyurethan sowie unter Variation des für die Oligourethane einzusetzenden Diisocyanats sowie des molaren Verhältnisses Glykol/Isocyanat

| | Verschäumungsbeispiel 1 | 2 | 3 | 4 | 5 |
|---|---|---|---|---|---|
| A 1 (Gewichtsteile) | 100 | — | — | — | — |
| A 2 (Gewichtsteile) | — | 100 | — | — | — |
| A 3 (Gewichtsteile) | — | — | 100 | — | — |
| A 4 (Gewichtsteile) | — | — | — | 100 | — |
| A 5 (Gewichtsteile) | — | — | — | — | 100 |
| Wasser (Gewichtsteile) | 2,5 | 2,5 | 2,5 | 2,5 | 2,5 |
| handelsüblicher Weichschaum-Stabilisator (Polyalkylenglykol-Siloxan-Copolymeres) (Gewichtsteile) | 0,7 | 0,7 | 0,7 | 0,7 | 0,7 |
| Dimethylethanolamin (Gewichtsteile) | 0,8 | 0,8 | 0,8 | 0,7 | 0,7 |
| handelsüblicher Weichschaum-aktivator (PS 207 der Bayer AG) Zinn-(II)-octoat (Gewichtsteile) | — | — | — | 0,1 | 0,1 |
| TDI 80 (Gewichtsteile) | 33,6 | 33,5 | 16,8 | 33,6 | 33,6 |
| TDI 65 (Gewichtsteile) | — | — | 16,8 | — | — |
| TDI-Index | 105 | 105 | 105 | 105 | 105 |
| Rohdichte (kg/m³) | 36 | 37 | 37 | 37 | 36 |
| Zugfestigkeit (KPa) | 110 | 160 | 125 | 125 | 165 |
| Bruchdehnung (%) | 225 | 345 | 210 | 270 | 310 |
| Stauchhärte (KPa) | 3,3 | 3,45 | 4,7 | 3,75 | 4,0 |
| Druckverformungsrest (DVR) 90% (%) | 9,3 | 5,3 | 3,5 | 6,0 | 8,8 |
| Schweißbarkeit Schaum/Schaum (sec)[1] | 10 | 8 | 6 | 10 | 8 |
| Schweißbarkeit Schaum/Polyamid-Textil (sec)[2] | 2,5 | 2,0 | 1,5 | 2,3 | 2,1 |

Standard-Polyetherschaum der Rohdichte 35 kg/m³
[1]) >20
[2]) 7

alle Schaumstoffe offenzellig.

2. B. Vergleich der Verschäumung von Lösungen von vorher segmentiert hergestellten Polyurethanetherdiolen mit der Verschäumung von nicht segmentiert im Reaktionsmedium Polyol hergestellten PU-Lösungen sowie mit dem Zusatz entsprechender Mengen Glykol bei der Schaumreaktion

| | Verschäumungsbeispiel | | | | | |
|---|---|---|---|---|---|---|
| | 6 | 7 | 8 | 9 | 10 | 11 |
| B 1 | 100 | — | — | — | — | — |
| B 2 | — | 100 | — | — | — | — |
| B 3 | — | — | 100 | — | — | — |
| B 4 | — | — | — | 100 | — | — |
| Polyether I | — | — | — | — | 100 | 100 |
| Glykol I | — | — | — | — | 17,4 | — |
| Glykol II | — | — | — | — | — | 18,5 |
| Wasser | 2,5 | 2,5 | 2,5 | 2,5 | 2,5 | 2,5 |
| handelsüblicher Weichschaum-Stabilisator (Polyalkylenglykol-Siloxan-Copolymeres) | 0,7 | 0,7 | 0,7 | 0,7 | 0,7 | 0,7 |
| Dimethylethanolamin | 0,8 | 0,8 | 0,8 | 0,8 | 0,2 | 0,2 |
| handelsüblicher Weichschaumaktivator (PS 207 der Bayer AG) | 0,15 | 0,15 | 0,15 | 0,15 | 0,3 | 0,3 |
| Zinn-(II)-oktoat | 0,05 | 0,05 | 0,12 | 0,1 | 0,05 | 0,15 |
| TDI 80 | 38,9 | 38,9 | 34,1 | 34,1 | 48,8 | 41,7 |
| TDI 65 | — | | | | | |
| TDI-Index | 105 | 105 | 105 | 105 | 105 | 105 |
| Rohdichte (kg/m$^3$) | 38 | 39 | 37 | 37 | Schrumpf | 39 |
| Zugfestigkeit (KPa) | 225 | 220 | 140 | 115 | | 150 |
| Bruchdehnung (%) | 350 | 260 | 325 | 260 | | 360 |
| Stauchhärte 40% (KPa) | 3,2 | 4,31 | 3,23 | 4,17 | | 2,8 |
| DVR 90% (%) | 82 | 88 | 7,6 | klebt | | klebt |
| Schweißbarkeit Schaum/Schaum (sec) | 5 | 5 | 10 | 10 | | 10 |
| Schweißbarkeit Schaum/Polyamid-Textil (sec) | 2 | 2 | 2,3 | 2,3 | | 2,3 |
| Offenzelligkeit (Skalenteile*) | 120 | 300 | 200 | 320 | | 300 |

*) Offenzelligkeit wurde nach einer beim Anmelder üblichen Methode bestimmt (Prinzip: Stromungswiderstand gegen normierten Gasstrom, der aufgebaute Druck wird gegen eine Wassersäule bestimmt).

Maße:

völlig offenzelliger Schaum: 0

völlig geschlossenzelliger Schaum: >350;

ein handelsüblicher, offenzelliger Polyetherschaum liegt bei 50—150 Skalenteile.

2. C.Herstellung von Weichschaumstoffen aus Oligourethan-PU-Lösungen in Polyethern unter Variation a) des zur Herstellung des Oligourethans eingesetzten Isocyanates; b) der zur Herstellung des Oligourethans eingesetzten Glykolkomponente; c) des molaren Verhältnisses Glykol/Isocyanat; d) der Konzentration des gelösten Oligourethans; e) des zur Lösung eingesetzten Basispolyethers

| | Verschäumungsbeispiel | | | | | | | | |
|---|---|---|---|---|---|---|---|---|---|
| | 12 | 13 | 14 | 15 | 16 | 17 | 18 | 19 | 20 |
| C 1 | 100 | — | — | — | — | — | — | — | — |
| C 2 | — | 100 | — | — | — | — | — | — | — |
| C 3 | — | — | 100 | — | — | — | — | — | — |
| C 4 | — | — | — | 100 | — | — | — | — | — |
| C 5 | — | — | — | — | 100 | — | — | — | — |
| C 6 | — | — | — | — | — | 100 | — | — | — |
| C 7 | — | — | — | — | — | — | 100 | — | — |
| C 8 | — | — | — | — | — | — | — | 100 | — |
| C 9 | — | — | — | — | — | — | — | — | 100 |
| Wasser | 2,5 | 2,5 | 2,5 | 2,5 | 2,5 | 2,5 | 2,5 | 2,5 | 2,5 |
| handelsüblicher Weichschaum-Stabilisator (Polyalkylenglykol-Siloxan-Copolymeres) | 0,7 | 0,7 | 0,7 | 0,7 | 0,7 | 0,7 | 0,7 | 0,7 | 0,7 |
| Dimethylethanolamin | 0,7 | 0,7 | 0,7 | 0,7 | 0,7 | 0,7 | 0,7 | 0,7 | 0,7 |
| handelsübliche Weichschaum-Aktivator (PS 207 der Bayer AG) | 0,15 | 0,15 | 0,15 | 0,15 | 0,15 | 0,15 | 0,15 | 0,15 | 0,15 |
| Zinn-(II)-octoat | 0,15 | 0,15 | 0,12 | 0,12 | 0,1 | 0,08 | 0,03 | 0,15 | 0,2 |
| TDI 80 | 34,8 | 35,1 | 35,0 | 34,4 | 34,5 | 34,7 | 32,4 | | |
| TDI 65 | | | | | | | | 36,7 | 32,4 |
| TDI-Index | 105 | 105 | 105 | 105 | 105 | 105 | 105 | 105 | 105 |
| Rohdichte (kg/m$^3$) | 35 | 36,5 | 36,5 | 37 | 36 | 37 | 41 | 41 | 39 |
| Zugfestigkeit (KPa) | 155 | 110 | 115 | 140 | 120 | 140 | 135 | 170 | 140 |
| Bruchdehnung (%) | 345 | 180 | 340 | 330 | 210 | 280 | 310 | 420 | 330 |
| Stauchhärte 40% (KPa) | 3,2 | 3,0 | 3,0 | 3,2 | 3,2 | 3,45 | 3,7 | 4,2 | 5,6 |
| DVR 90% (%) | 6,0 | 6,1 | 4,4 | 6,0 | 18 | 23 | 89 | 28 | 88 |
| Schweißbarkeit Schaum/Schaum (sec) | 7 | 10 | 15 | 8 | 7 | 5 | 9 | 7 | 8 |
| Schweißbarkeit Schaum/Polyamid-Textil (sec) | 2 | 2,5 | 3,2 | 2,3 | 2,0 | 1,4 | 2,5 | 2,0 | 2,0 |

alle Schaumstoffe offenzellig.

**Patentansprüche**

1. Lösungen von

1) 3 bis 60 Gew.-%, bezogen auf 1) und 2), an separat hergestellten, OH-endgruppenhaltigen Oligourethanethern als Umsetzungsprodukte 1) von
   a) Diisocyanaten mit
   b) Dialkoholen des mittleren Molekulargewichts 200 bis 800, wobei das stöchiometrische Verhältnis von a) zu b) bei Dialkoholen b) des mittleren Molekulargewichts 200 bis 280 zwischen 0,5 und 0,7, bei Dialkoholen b) des mittleren Molekulargewichts 280 bis 600 zwischen 0,5 und 0,9 und bei Dialkoholen b) des mittleren Molekulargewichts 600 bis 800 zwischen 0,5 und 0,75 beträgt, in

2) mindestens zwei Hydroxylgruppen aufweisenden Polyetherpolyolen mit einem mittleren Molekulargewicht von 1000 bis 12 000.

2. Lösungen nach Anspruch 1, wobei als Dialkohol b) Polypropylenglykole des mittleren Molekulargewichts 200 bis 600 verwendet werden.

3. Lösungen nach Anspruch 1 und 2, wobei als Diisocyanat a) 2,4- und/oder 2,6-Toluylendiisocyanat und/oder Diphenylmethan-2,4'- und/oder -4,4'-diisocyanate verwendet werden.

4. Verfahren zur Herstellung von flammkaschierbaren und hochfrequenzverschweißbaren Polyurethanweichschaumstoffen durch Umsetzung von

A) Polyisocyanaten, mit
B) mindestens zwei Hydroxylgruppen aufweisenden höhermolekularen Verbindungen,
C) gegebenenfalls weiteren höher- und/oder niedermolekularen Verbindungen mit gegenüber Isocyanaten reaktiven Wasserstoffatomen und Wasser,
D) gegebenenfalls unter Mitverwendung von anderen Treibmitteln, Katalysatoren, Schaumstabilisatoren und anderen Zusatzstoffen,

wobei als Hydroxygruppen-aufweisende höhermolekulare Verbindungen B) Lösungen nach Ansprüchen 1 bis 3 ganz oder anteilweise eingesetzt werden.

**Claims**

1. Solutions of

1) from 3 to 60% by weight, based on 1) and 2), of separately prepared oligo-urethane ethers containing terminal OH groups in the form of reaction products 1) of
   a) diisocyanates with
   b) dialcohols having an overage molecular weight of from 200 to 800, the stoichiometric ratio of a) to b) amounting to between 0.5 and 0.7 in the case of dialcohols b) having an average molecular weight of from 200 to 280, to between 0.5 and 0.9 in the case of dialcohols b) having an average molecular weight of from 280 to 600 and to between 0.5 and 0,75 in the case of dialcohols b) having an average molecular weight of from 600 to 800,

in

2) polyether polyols containing at least two hydroxy groups and having an average molecular weight of from 1000 to 12 000.

2. Solutions according to Claim 1, wherein polypropylene glycols having an average molecular weight of from 200 to 600 are used as the dialcohol b).

3. Solutions according to Claim 1 and 2, wherein 2,4- and/or 2,6-tolylene diisocyanate and/or diphenyl methane-2,4'- and/or -4,4'-diisocyanates are used as the diisocyanate a).

4. A process for the production of flame-laminatable and high-frequency-weldable flexible polyurethane foams by reacting

A) polyisocyanates with
B) relatively high molecular weight compounds containing at least two hydroxyl groups,
C) optionally other relatively high molecular weight and/or low molecular weight compounds containing isocyanate-reactive hydrogen atoms and water,
D) optionally also using other blowing agents, catalysts, foam stabilisers and other additives,

wherein the solutions according to Claims 1 to 3 are exclusively or partly used as the relatively high molecular weight compounds B) containing hydroxy groups.

**Revendications**

1. Solutions de

1) 3 à 60% en poids, par rapport à 1) et à 2), oligouréthane-éthers contenant des groupes OH terminaux, préparés séparément, sous forme de produits de réaction 1)
   a) de diisocyanates avec
   b) des dialcools de poids moléculaire moyen de 200 à 800, le rapport stoechiométrique de a) envers b) dans le cas de dialcools b) d'un poids moléculaire moyen de 200 à 280 étant entre 0,5 et 0,7, pour les dialcools b) d'un poids moléculaire moyen de 280 à 600 entre 0,5 et 0,9 et pour les dialcools b) d'un poids moléculaire moyen de 600 à 800 entre 0,5 et 0,75, dans
2) des polyétherpolyols présentant au moins deux groupes hydroxyle et ayant un poids moléculaire moyen de 1000 à 12 000.

2. Solutions selon la revendication 1, dans lesquelles on utilise comme dialcool b) des polypropylène glycols d'un poids moléculaire moyen de 200 à 600.

3. Solutions selon les revendications 1 et 2, dans lesquelles on utilise comme diisocyanate a) du 2,4- et/ou 2,6-toluylène-diisocyante et/ou des diphénylméthane-2,4'- et/ou -4,4'-diisocyanates.

4. Procédé de fabrication de matières cellulaires souples de polyuréthanes qui sont doublables à la flamme et soudables à haute fréquence, par réaction

A) de polyisocyanates, avec
B) des composés à poids moléculaire élevé présentant au moins deux groupes hydroxyle,
C) éventuellement d'autres composés à poids moléculaire élevé et/ou inférieur avec atomes d'hydrogène réactifs envers les isocyanates et de l'eau,
D) éventuellement avec utilisation conjointe d'autres agents expanseurs, catalyseurs, stabilisants de mousse et autres substances d'addition, en employant totalement ou partiellement, comme composés B) à poids moléculaire élevé présentant des groupes hydroxyle, des solutions selon les revendications 1 à 3.